# EUROPEAN PATENT APPLICATION

(11) **EP 4 810 868 A1**
(43) Date of publication of application: **23.09.2026**
(21) Application number: 26155702.9
(22) Date of filing: 02.02.2026
(51) Int. Cl.: F24H 1/00, B60H 1/22, F24H 1/12, F24H 9/00, F24H 9/02, F24H 9/1818, H05B 3/82

(54) **PTC WATER HEATER FOR NEW ENERGY VEHICLE**

(30) Priority: 20.03.2025 CN 202510333161
(71) Applicant: Dongguan Sharing Electronics Co., Ltd., Dongguan City, Guangdong Province 523991 (CN)
(72) Inventor: WU, Xiang, Dongguan City (CN); E, Xingang, Dongguan City (CN); WU, Laisheng, Dongguan City (CN); LI, Qing, Dongguan City (CN)
(74) Representative: Chung, Hoi Kan

(57) **Abstract**

This disclosure discloses a PTC water heater for a new energy vehicle, including an aluminum water channel member and an aluminum water tank, where the aluminum water tank is located at the bottom of the aluminum water channel member, a PTC compartment sealing cover is arranged on the top of the aluminum water channel member, a controller compartment is arranged on one side of the aluminum water channel member and the aluminum water tank, a high-voltage socket and a low-voltage socket are respectively arranged on the controller compartment, a controller is arranged inside the controller compartment, a plastic insulating member is arranged on one side of the controller, a PTC heating body is arranged inside the aluminum water channel member, and a bus bar member is arranged on the top of the PTC heating body.

## Description

### TECHNICAL FIELD

This disclosure relates to the technical field of PTC water heaters for vehicles, and in particular to, a PTC water heater for a new energy vehicle.

### BACKGROUND

With the promotion of the national dual "carbon" policy, new energy vehicles have witnessed rapid development, and the demand for PTC water heaters in automotive thermal management has been increasing continuously. At present, most PTC water heaters on the market are equipped with plastic shells, which are featured by low structural strength, low protection class and short service life. For some PTC water heaters with aluminum shells, their PTC water channel aluminum shells and controller compartments are mostly of a split structure, which needs to be connected by fasteners and sealed with glue, resulting in a complicated structure, multiple assembly procedures, poor sealing performance, and poor heat dissipation of an IGBT in the controller compartment. The PTC heating body adopts a single-layer PI insulating layer, which has no compressibility and is prone to damage. The PTC and the controller are mostly connected by wires, leading to low reliability.

At present, no effective solution has yet been proposed to address the relevant technical problems.

### SUMMARY

In view of the problems in the related art, this disclosure provides a PTC water heater for a new energy vehicle, so as to overcome the above technical problems in the prior art.

To this end, a technical solution adopted by this disclosure is as follows:
a PTC water heater for a new energy vehicle, including an aluminum water channel member and an aluminum water tank, where the aluminum water tank is located at the bottom of the aluminum water channel member, a PTC compartment sealing cover is arranged on the top of the aluminum water channel member, a controller compartment is arranged on one side of the aluminum water channel member and the aluminum water tank, a high-voltage socket and a low-voltage socket are respectively arranged on the controller compartment, a controller is arranged inside the controller compartment, a plastic insulating member is arranged on one side of the controller, a PTC heating body is arranged inside the aluminum water channel member, and a bus bar member is arranged on the top of the PTC heating body.

Preferably, a plurality of U-shaped grooves matched with the PTC heating body are formed inside the aluminum water channel member, and a first sealing concave groove matched with the PTC compartment sealing cover is formed in an inner top of the aluminum water channel member.

Preferably, a wire passing hole in communication with the controller compartment is formed in one side of the aluminum water channel member, and a sealing cover matched with the controller compartment is arranged on one side of the controller compartment.

Preferably, a second sealing concave groove matched with the sealing cover is formed in one side inside the controller compartment, and a socket mounting seat for mounting the high-voltage socket and the low-voltage socket is formed in the controller compartment.

Preferably, the bus bar member includes a plastic body, an NTC clamping groove is formed in a corner position of one side of the plastic body away from the controller compartment, and an NTC wire harness clamping groove is arranged on the top of the plastic body and between two groups of NTC clamping grooves.

Preferably, the plastic body is provided with a PTC connecting copper bar which passes through the wire passing hole and extends into the controller compartment to be electrically connected with the controller.

Preferably, the PTC heating body is of a U-shaped structure, and the PTC heating body includes a PTC element, a metal electrode sheet, a silicone PI composite insulating sheet, and a U-shaped aluminum member, the metal electrode sheet is arranged outside the PTC element, the silicone PI composite insulating sheet is arranged outside the metal electrode sheet, and the U-shaped aluminum member is wrapped around the outside of the silicone PI composite insulating sheet.

Preferably, a water inlet and a water outlet are respectively arranged on the aluminum water channel member, and temperature sensors are symmetrically arranged on the water inlet and the water outlet.

Beneficial effects of this disclosure are as follows: the integrated aluminum structure of the PTC compartment and the controller compartment greatly improves the integration degree, reduces the number of parts and assembly procedures, and simultaneously improves the heat dissipation performance of an IGBT in the controller compartment;

the arrangement of the PTC connecting copper bar reduces the number of components and assembly procedures; and the PTC connecting copper bar can be directly connected to the controller passing through the wire passing hole, which greatly improves assembly convenience and reliability;

the tight fit between the U-shaped aluminum member and the U-shaped groove solves the problem that some of the plurality of U-shaped grooves cannot be tightly fitted due to dimensional tolerances; and the PI polyimide in the silicone PI composite insulating sheet features high mechanical strength and insulation, which ensures insulation safety of the high-voltage component;
the U-shaped structure of the U-shaped aluminum member directly protects an insulating material of the silicone PI composite insulating sheet inside, thereby solving the problem of damage to the silicone PI composite insulating sheet during assembly; and
the two NTC temperature sensors are symmetrically arranged at the water inlet and outlet of the aluminum water channel member, so that a non-differentiated usage manner for the inlet and outlet is achieved, and the temperature collection and control are not affected when the inlet and outlet assembly of the vehicle is interchanged.

### BRIEF DESCRIPTION OF THE DRAWINGS

To describe the technical solutions in the embodiments of this disclosure or in the prior art more clearly, the following briefly introduces the accompanying drawings required for describing the embodiments. Apparently, the accompanying drawings in the following description show merely some embodiments of this disclosure, and a person of ordinary skill in the art may still derive other drawings from these accompanying drawings without creative efforts.
FIG. 1 is a schematic structural diagram of a PTC water heater for a new energy vehicle according to an embodiment of this disclosure;
FIG. 2 is an exploded view of a PTC water heater for a new energy vehicle according to an embodiment of this disclosure;
FIG. 3 is a top view of an aluminum water channel member in a PTC water heater for a new energy vehicle according to an embodiment of this disclosure;
FIG. 4 is a bottom view of an aluminum water channel member in a PTC water heater for a new energy vehicle according to an embodiment of this disclosure;
FIG. 5 is a schematic structural diagram of a bus bar member in a PTC water heater for a new energy vehicle according to an embodiment of this disclosure;
FIG. 6 is a side view of a bus bar member in a PTC water heater for a new energy vehicle according to an embodiment of this disclosure;
FIG. 7 is a side view of a PTC connecting copper bar in a PTC water heater for a new energy vehicle according to an embodiment of this disclosure;
FIG. 8 is a section view of a PTC heating body in a PTC water heater for a new energy vehicle according to an embodiment of this disclosure;
FIG. 9 is a bottom view of a temperature sensor in a PTC water heater for a new energy vehicle according to an embodiment of this disclosure; and
FIG. 10 is a top view of a temperature sensor in a PTC water heater for a new energy vehicle according to an embodiment of this disclosure.

In the figures:
1. aluminum water channel member; 2. aluminum water tank; 3. PTC compartment sealing cover; 4. controller compartment; 5. high-voltage socket; 6. low-voltage socket; 7. controller; 8. plastic insulating member; 9. PTC heating body; 10. bus bar member; 11. U-shaped groove; 12. first sealing concave groove; 13. wire passing hole; 14. sealing cover; 15. second sealing concave groove; 16. socket mounting seat; 17. plastic body; 18. NTC clamping groove; 19. NTC wire harness clamping groove; 20. PTC connecting copper bar; 21. PTC element; 22. metal electrode sheet; 23. silicone PI composite insulating sheet; 24. U-shaped aluminum member; 25. temperature sensor.

### DETAILED DESCRIPTION OF THE EMBODIMENTS

To further illustrate the various embodiments, this disclosure is provided with accompanying drawings. These accompanying drawings are a part of the disclosed content of this disclosure, which are mainly used to illustrate the embodiments and can be in conjunction with the relevant descriptions in the specification to explain operation principles of the embodiments. With reference to these contents, those of ordinary skill in the art should be able to understand other possible implementations as well as the advantages of this disclosure. Assemblies in the figures are not drawn to scale, and similar assembly symbols are commonly used to represent to similar assemblies.

According to an embodiment of this disclosure, a PTC water heater for a new energy vehicle is provided.

### Embodiment I:

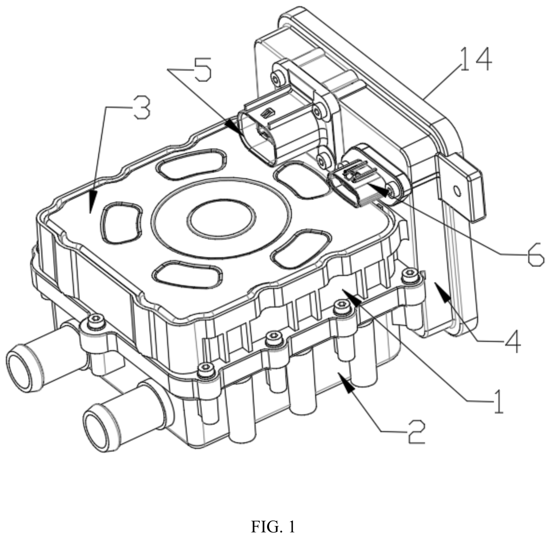

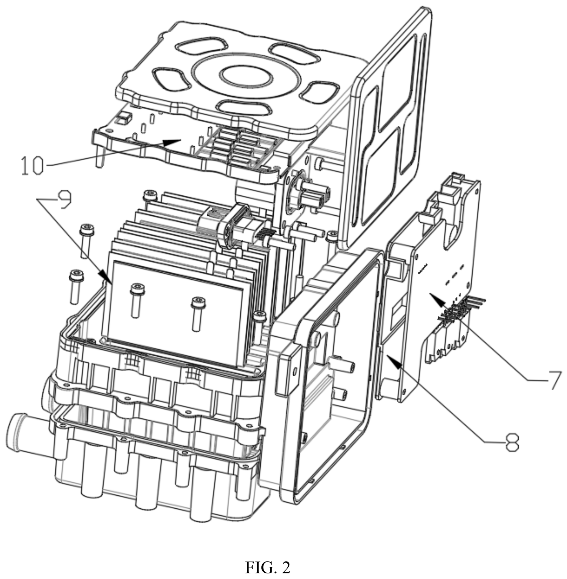

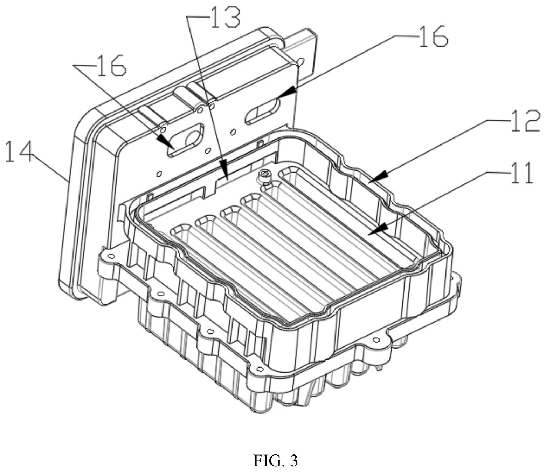

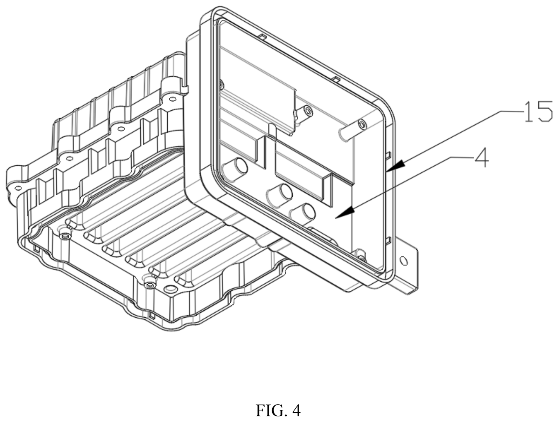

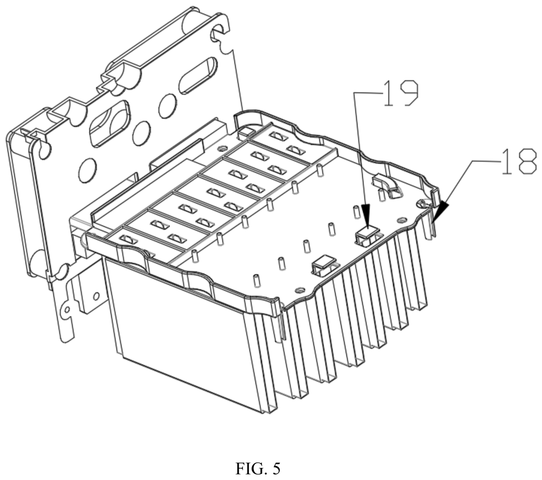

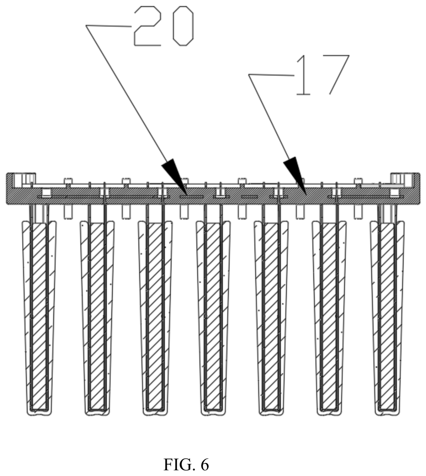

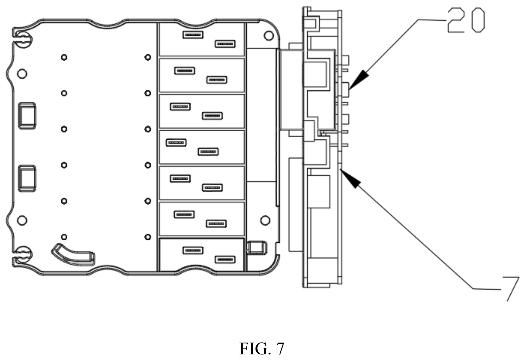

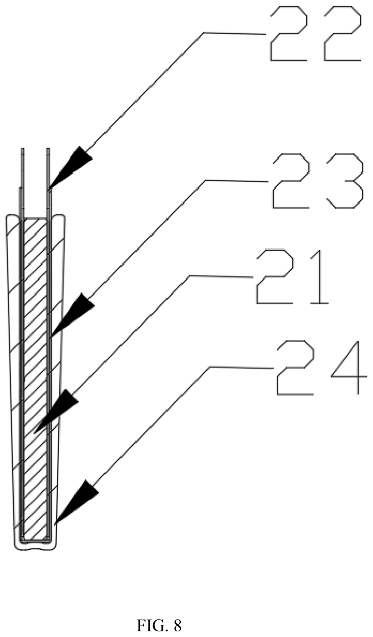

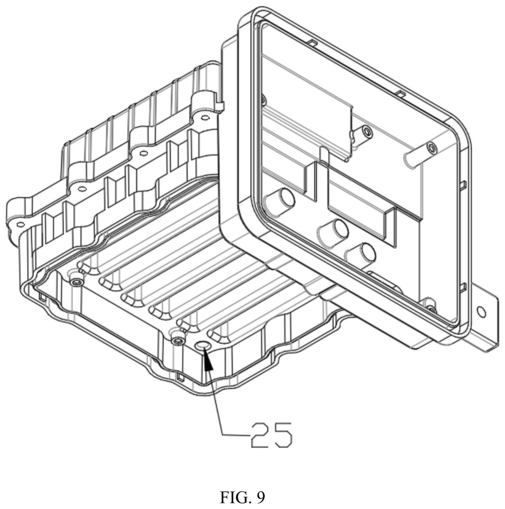

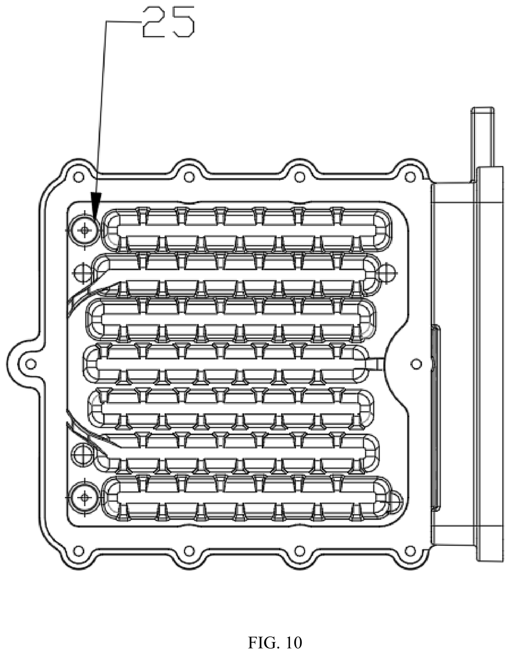

As shown in FIG. 1 to FIG. 10, a PTC water heater for a new energy vehicle according to an embodiment of this disclosure includes an aluminum water channel member 1 and an aluminum water tank 2, where the aluminum water tank 2 is located at the bottom of the aluminum water channel member 1, a PTC compartment sealing cover 3 is arranged on the top of the aluminum water channel member 1, a controller compartment 4 is arranged on one side of the aluminum water channel member 1 and the aluminum water tank 2, a high-voltage socket 5 and a low-voltage socket 6 are respectively arranged on the controller compartment 4, a controller 7 is arranged inside the controller compartment 4, a plastic insulating member 8 is arranged on one side of the controller 7, a PTC heating body 9 is arranged inside the aluminum water channel member 1, and a bus bar member 10 is arranged on the top of the PTC heating body 9.

### Embodiment II:

As shown in FIG. 1 to FIG. 10, a plurality of U-shaped grooves 11 matched with the PTC heating body 9 are formed inside the aluminum water channel member 1, and a first sealing concave groove 12 matched with the PTC compartment sealing cover 3 is formed in an inner top of the aluminum water channel member 1; a wire passing hole 13 in communication with the controller compartment 4 is formed in one side of the aluminum water channel member 1, and a sealing cover 14 matched with the controller compartment is arranged on one side of the controller compartment 4; and a second sealing concave groove 15 matched with the sealing cover 14 is formed in one side inside the controller compartment 4, and a socket mounting seat 16 for mounting the high-voltage socket 5 and the low-voltage socket 6 is formed in the controller compartment 4.

### Embodiment III:

As shown in FIG. 1 to FIG. 10, the bus bar member 10 includes a plastic body 17, an NTC clamping groove 18 is formed in a corner position of one side of the plastic body 17 away from the controller compartment 4, and an NTC wire harness clamping groove 19 is arranged on the top of the plastic body 17 and between two groups of NTC clamping grooves 18; the plastic body 17 is provided with a PTC connecting copper bar 20 which passes through the wire passing hole 13 and extends into the controller compartment 4 to be electrically connected with the controller 7; the PTC heating body 9 is of a U-shaped structure, and the PTC heating body 9 includes a PTC element 21, a metal electrode sheet 22, a silicone PI composite insulating sheet 23, and a U-shaped aluminum member 24, the metal electrode sheet 22 is arranged outside the PTC element 21, the silicone PI composite insulating sheet 23 is arranged outside the metal electrode sheet 22, and the U-shaped aluminum member 24 is wrapped around the outside of the silicone PI composite insulating sheet 23; and a water inlet and a water outlet are respectively arranged on the aluminum water channel member 1, and temperature sensors 25 are symmetrically arranged on the water inlet and the water outlet.

In conclusion, by means of the above technical solutions of this disclosure, the integrated aluminum structure of the PTC compartment and the controller compartment greatly improves the integration degree, reduces the number of parts and assembly procedures, and simultaneously improves the heat dissipation performance of an IGBT in the controller compartment;
the arrangement of the PTC connecting copper bar 20 reduces the number of components and assembly procedures; and the PTC connecting copper bar 20 can be directly connected to the controller 7 passing through the wire passing hole 13, which greatly improves assembly convenience and reliability;
the tight fit between the U-shaped aluminum member 24 and the U-shaped groove 11 solves the problem that some of the plurality of U-shaped grooves 11 cannot be tightly fitted due to dimensional tolerances; and the PI polyimide in the silicone PI composite insulating sheet 23 features high mechanical strength and insulation, which ensures insulation safety of the high-voltage component;
the U-shaped structure of the U-shaped aluminum member 24 directly protects an insulating material of the silicone PI composite insulating sheet 23 inside, thereby solving the problem of damage to the silicone PI composite insulating sheet 23 during assembly; and
the two NTC temperature sensors are symmetrically arranged at the water inlet and outlet of the aluminum water channel member 1, so that a non-differentiated usage manner for the inlet and outlet is achieved, and the temperature collection and control are not affected when the inlet and outlet assembly of the vehicle is interchanged.

The above are only preferred embodiments of this disclosure, and are not
intended to limit this disclosure. Any modifications, equivalent substitutions, and improvements made within the spirit and principles of this disclosure should fall within
the protection scope of this disclosure.

## Claims

1. A PTC water heater for a new energy vehicle, **characterized by** comprising an aluminum water channel member (1) and an aluminum water tank (2), wherein the aluminum water tank (2) is located at the bottom of the aluminum water channel member (1), a PTC compartment sealing cover (3) is arranged on the top of the aluminum water channel member (1), a controller compartment (4) is arranged on one side of the aluminum water channel member (1) and the aluminum water tank (2), a high-voltage socket (5) and a low-voltage socket (6) are respectively arranged on the controller compartment (4), a controller (7) is arranged inside the controller compartment (4), a plastic insulating member (8) is arranged on one side of the controller (7), a PTC heating body (9) is arranged inside the aluminum water channel member (1), and a bus bar member (10) is arranged on the top of the PTC heating body (9).

2. The PTC water heater for a new energy vehicle according to claim 1, **characterized in that** a plurality of U-shaped grooves (11) matched with the PTC heating body (9) are formed inside the aluminum water channel member (1), and a first sealing concave groove (12) matched with the PTC compartment sealing cover (3) is formed in an inner top of the aluminum water channel member (1).

3. The PTC water heater for a new energy vehicle according to claim 2, **characterized in that** a wire passing hole (13) in communication with the controller compartment (4) is formed in one side of the aluminum water channel member (1), and a sealing cover (14) matched with the controller compartment is arranged on one side of the controller compartment (4).

4. The PTC water heater for a new energy vehicle according to claim 3, **characterized in that** a second sealing concave groove (15) matched with the sealing cover (14) is formed in one side inside the controller compartment (4), and a socket mounting seat (16) for mounting the high-voltage socket (5) and the low-voltage socket (6) is formed in the controller compartment (4).

5. The PTC water heater for a new energy vehicle according to claim 4, **characterized in that** the bus bar member (10) comprises a plastic body (17), an NTC clamping groove (18) is formed in a corner position of one side of the plastic body (17) away from the controller compartment (4), and an NTC wire harness clamping groove (19) is arranged on the top of the plastic body (17) and between two groups of NTC clamping grooves (18).

6. The PTC water heater for a new energy vehicle according to claim 5, **characterized in that** the plastic body (17) is provided with a PTC connecting copper bar (20) which passes through the wire passing hole (13) and extends into the controller compartment (4) to be electrically connected with the controller (7).

7. The PTC water heater for a new energy vehicle according to claim 1, **characterized in that** the PTC heating body (9) is of a U-shaped structure, and the PTC heating body (9) comprises a PTC element (21), a metal electrode sheet (22), a silicone PI composite insulating sheet (23), and a U-shaped aluminum member (24), the metal electrode sheet (22) is arranged outside the PTC element (21), the silicone PI composite insulating sheet (23) is arranged outside the metal electrode sheet (22), and the U-shaped aluminum member (24) is wrapped around the outside of the silicone PI composite insulating sheet (23).

8. The PTC water heater for a new energy vehicle according to claim 1, **characterized in that** a water inlet and a water outlet are respectively arranged on the aluminum water channel member (1), and temperature sensors (25) are symmetrically arranged on the water inlet and the water outlet.
